# EUROPEAN PATENT APPLICATION

(11) **EP 4 427 832 A1**
(43) Date of publication of application: **11.09.2024**
(21) Application number: 24153601.0
(22) Date of filing: 24.01.2024
(51) Int. Cl.: B01D 53/00, B01D 53/62, C25B 1/23, C25B 15/08, C25B 1/04

(54) **CARBON DIOXIDE CONVERSION APPARATUS AND CARBON DIOXIDE CONVERSION METHOD**

(30) Priority: 07.03.2023 JP 2023034938
(71) Applicant: Toshiba Energy Systems & Solutions Corporation, Saiwai-ku Kawasaki-shi Kanagawa (JP)
(72) Inventor: OGAWA, Takashi, Tokyo (JP)
(74) Representative: Hoffmann Eitle

(57) **Abstract**

A carbon dioxide conversion apparatus 1 includes: a carbon dioxide electrolysis part 3 that includes: a cathode chamber 8 to reduce carbon dioxide to produce carbon monoxide; and an anode chamber 9 to oxidize an oxidizable substance to produce oxygen and carbon dioxide; a carbon dioxide capture part 5 to separate and capture the carbon dioxide from an oxygen-carbon dioxide containing gas produced in the anode chamber 9; a carbon monoxide purification part 4 to purify the carbon monoxide from a carbon monoxide containing gas produced in the cathode chamber 8; and an oxidation part 6 to perform a reaction between a reducing gas and a carbon dioxide containing gas, the reducing gas containing a residual carbon monoxide discharged from the carbon monoxide purification part 4, and the carbon dioxide containing gas being separated and captured in the carbon dioxide capture part 5 and containing a residual oxygen.

## Description

### FIELD

Embodiments relate to a carbon dioxide conversion apparatus and a carbon dioxide conversion method.

### BACKGROUND

Fossil fuels such as natural gas, coal, and petroleum is combusted to generate carbon dioxide (CO₂) which is considered the main factor behind global warming due to a greenhouse effect, and thus the fossil fuels should be used less. Know example methods of reducing the carbon dioxide are performed by removing carbon dioxide from an exhaust gas from a carbon dioxide generation source to reduce an amount of the carbon dioxide emitted to the air and then chemically synthesizing a product from the carbon dioxide removed from the exhaust. An example method of the know example methods is performed by reducing carbon dioxide to produce carbon monoxide (CO), and synthesizing an organic substance from the produced carbon monoxide (CO) and hydrogen (H₂), and the example method has developed.

The gas produced in a cathode chamber, which is included in gases produced in a carbon dioxide electrolysis device, contains CO, hydrogen (H₂) and unreacted CO₂, the CO being produced by reducing CO₂, the H₂ being produced by co-electrolysis of H₂O and CO₂. The gas produced in an anode chamber contains oxygen (O₂) and by-produced CO₂, the O₂ being produced by oxidizing a carbonate ion (CO₃²⁻) and a hydroxide ion (OH⁻) which are a part of the reduction products produced by reducing CO₂, the by-produced CO₂ being secondarily produced by the electrolysis. Thus, the products through CO₂ electrolysis contain main products such as CO, H₂, and O₂, and the unreacted CO₂ and the by-produced CO₂. Emitting a purge gas as it is after purifying and capturing active ingredients such as CO and H₂ from such gases produced in the CO₂ electrolysis device prevents a reduction in the emission of CO₂ into the air, and lowers effective usability of CO₂. Therefore, the reduction in the emission of CO₂ in the air and an increase in the effective usability of CO₂ are required.

### BRIEF DESCRIPTION OF THE DRAWINGS

FIG. 1 is a diagram illustrating a carbon dioxide conversion apparatus of an embodiment.
FIG. 2 is a diagram illustrating a modified example of the carbon dioxide conversion apparatus of the embodiment.

### DETAILED DESCRIPTION

Hereinafter, a carbon dioxide conversion apparatus of an embodiment will be described with reference to the drawings. In each embodiment presented below, substantially the same constituent parts are denoted by the same reference signs, and a description thereof may be partially omitted. The drawings are schematic, and the relation of the thickness and planar dimension, a thickness ratio among the parts, and so on may be different from actual ones. Note that a symbol of "~" in the following description indicates a range between an upper limit value and a lower limit value of respective numerical values. In this case, the range of the numerical values includes the upper limit value and the lower limit value.

A carbon dioxide conversion apparatus of an embodiment includes: a carbon dioxide supply part configured to capture carbon dioxide from a carbon dioxide containing gas and supply the carbon dioxide; a carbon dioxide electrolysis part that includes: a cathode chamber configured to receive the carbon dioxide from the carbon dioxide supply part and reduce the carbon dioxide to produce carbon monoxide; and an anode chamber configured to oxidize an oxidizable substance to produce oxygen and carbon dioxide; a carbon dioxide capture part configured to separate and capture the carbon dioxide from an oxygen-carbon dioxide containing gas to be produced in the anode chamber; a carbon monoxide purification part configured to purify the carbon monoxide from a carbon monoxide containing gas to be produced in the cathode chamber; and an oxidation part configured to perform a reaction between a reducing gas and a carbon dioxide containing gas, the reducing gas being discharged from the carbon monoxide purification part and containing a residual carbon monoxide, and the carbon dioxide containing gas being separated and captured in the carbon dioxide capture part and containing a residual oxygen.

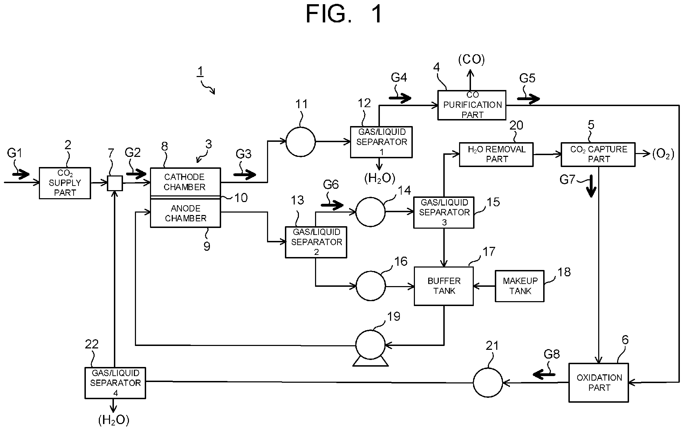

FIG. 1 is a diagram illustrating the carbon dioxide conversion apparatus of the embodiment. A carbon dioxide conversion apparatus 1 illustrated in FIG. 1 includes a CO₂ supply part 2 which captures and supplies CO₂ from a carbon dioxide (CO₂) containing gas, a CO₂ electrolysis part 3 which converts CO₂ into carbon monoxide (CO) through electrolysis and reduction, a CO purification part 4 which purifies carbon monoxide (CO) from a gas produced in a cathode chamber of the CO₂ electrolysis part 3, a CO₂ capture part 5 which separates and captures carbon dioxide (CO₂) from a gas produced in an anode chamber of the CO₂ electrolysis part 3, and an oxidation part 6 which reacts a reducing gas containing residual CO discharged from the CO purification part 4 and a CO₂ containing gas separated and captured in the CO₂ capture part 5 and containing residual oxygen to convert CO into CO₂ and remove the residual oxygen (O₂).

The CO₂ supply part 2 is configured to separate and capture CO₂ from an emission gas G1 containing CO₂ (CO₂ containing gas) emitted from a thermal power plant, a waste incineration plant, a steel plant, and the like, and supply a CO₂ gas G2 having an increased CO₂ concentration to the CO₂ electrolysis part 3. The CO₂ supply part 2 can be constituted by applying, for example, a chemical absorption method of using a chemical absorption solution such as an amine aqueous solution, a physical absorption method of using a physical absorption solution such as methanol or a polyethylene glycol solution, a solid absorption method of using a solid absorbent such as an amine compound, a membrane separation method of using a CO₂ separation membrane, a physical adsorption method of using an inorganic substance such as zeolite as an adsorbent, a PSA (Pressure Swing Adsorption method), a TSA (Thermal Swing Adsorption method), or the like is applied. For example, the chemical absorption method and a chemical absorber which use the amine aqueous solution can supply the emission gas G1 to an absorption tower in which the amine aqueous solution is sprayed, and heat the amine aqueous solution absorbing CO₂ in a regeneration tower to capture CO₂ emitted from the amine aqueous solution.

The capture method and device of CO₂ applied to the CO₂ supply part 2 are not particularly limited, and various methods and devices which allow the capture of CO₂ from the emission gas (CO₂ containing gas) G1 can be applied. The CO₂ supply part 2 is connected to a cathode chamber (reducing part) 8 of the CO₂ electrolysis part 3 via a gas mixer 7. The CO₂ supply part 2 is configured to supply a CO₂ gas G2 to the cathode chamber 8 via the gas mixer 7.

The CO₂ electrolysis part 3 is a CO₂ electrolysis device having an electrolysis cell, and includes the cathode chamber (reducing part) 8 and an anode chamber (oxidizing part) 9. The cathode chamber 8 includes a reduction electrode (cathode), the anode chamber 9 includes an oxidation electrode (anode), and an electrolytic solution is made to flow through at least the anode chamber 9. A CO₂ gas is made to flow through the cathode chamber 8. Examples of the electrolytic solution supplied into the anode chamber 9, include a solution using water (H₂O), and an aqueous solution containing an optional electrolyte. Examples of the aqueous solution containing the electrolyte, include an aqueous solution containing at least one ion selected from a phosphate ion (PO₄²⁻), a borate ion (BO₃³⁻), a sodium ion (Na⁺), a potassium ion (K⁺), a calcium ion (Ca²⁺), a lithium ion (Li⁺), a cesium ion (Cs⁺), a magnesium ion (Mg²⁺), a chloride ion (Cl⁻), a hydrogen carbonate ion (HCO₃⁻), a carbonate ion (CO₃²), and a hydroxide ion (OH⁻). Examples of the electrolytic solution include an alkaline aqueous solution containing at least one dissolved compound selected from KOH, KHCO₃, and K₂CO₃.

The cathode chamber 8 can receives the CO₂ gas G2 captured in the CO₂ supply part 2. The cathode chamber 8 has a gas flow path facing a reduction electrode which is not illustrated in Fig. 1. The CO₂ gas is supplied to the gas flow path. The anode chamber 9 has a liquid flow path facing an oxidation electrode which is not illustrated in Fig. 1, for example. The electrolytic solution is supplied to the liquid flow path. The cathode chamber 8 and the anode chamber 9 are isolated by a diaphragm 10 capable of moving at least one ion selected from a hydrogen ion (H⁺), a hydroxide ion (OH⁻), a carbonate ion (CO₃²⁻), and a hydrogen carbonate ion (HCO₃⁻). Examples of the diaphragm 10 include an ion exchange membrane. The CO₂ electrolysis part 3 (the CO₂ electrolysis device having the electrolysis cell) may have a single electrolysis cell or a structure in which electrolysis cells are arranged and connected in a plane direction, or may have a stack structure in which a plurality of the electrolysis cells are stacked to be integrated.

Each of the reduction electrode and the oxidation electrode of the CO₂ electrolysis part 3 are connected to a direct-current power supply which is not illustrated in Fig. 1. The reduction electrode and the oxidation electrode of the CO₂ electrolysis part 3, can receive a direct current from the direct-current power supply to perform the following electrolytic reaction in the cathode chamber 8 and in the anode chamber 9. The cathode chamber 8 can perform CO₂ electrolytic reaction and CO₂ reduction reaction, as presented in the following formula (1). The cathode chamber 8 can produce CO and a carbonate ion (CO₃²⁻) by the CO₂ reduction reaction.

2CO₂ + 2e⁻ → CO + CO₃²⁻ ... (1)

The carbonate ion (CO₃²⁻) produced in the cathode chamber 8 moves to the anode chamber 9 via the diaphragm 10. The anode chamber 9 can perform an oxidation reaction of the carbonate ion (CO₃²⁻) produced in the cathode chamber 8 and moved via the diaphragm 10 to produce CO₂ and O₂, as presented in the following formula (2).

CO₃²⁻ → CO₂ + 0.5O₂ + 2e⁻ ... (2)

Moreover, the cathode chamber 8 can perform an electrolytic reaction of H₂O in the electrolytic solution to produce hydrogen (H₂) and hydroxide ions (OH⁻), as presented in the following formula (3).

2H₂O + 2e⁻ → H₂ + 2OH⁻ ... (3)

The hydroxide ions (OH⁻) produced in the cathode chamber 8 move to the anode chamber 9 via the diaphragm 10. Then, the anode chamber 9 can produce water (H₂O) and oxygen (O₂), as presented in the following formula (4).

2OH⁻ → 0.5O₂ + H₂O + 2e⁻ ... (4)

Further, The anode chamber 9 can electrolyze water (H₂O) in the electrolytic solution to produce oxygen (O₂) and hydrogen ions (H⁺), as presented in the following formula (5).

2H₂O → 4H⁺ + Q₂ + 4e⁻ ... (5)

The produced hydrogen ions (H⁺) move to the cathode chamber 8 via the diaphragm 10. The hydrogen ions (H⁺) reach the cathode chamber 8, and electrons (e⁻) reach the cathode chamber 8 through an external circuit, and then the cathode chamber 8 can perform a reaction presented in the following formula (6) to produce hydrogen.

4H⁺ + 4e⁻ → 2H₂ ... (6)

The cathode chamber 8 can perform the CO₂ reduction reaction presented in the formula (1) to produce CO, and can perform the H₂O electrolytic reaction presented in the formula (3) and the reaction presented in the formula (6) to produce H₂. The CO and H₂ produced in the cathode chamber 8 are discharged from the cathode chamber 8 with unreacted CO₂ and saturated steam. A mixed gas G3 discharged from the cathode chamber 8 and containing CO, H₂, CO₂, and the saturated steam (H₂O) is cooled by a cooler 11, and thereafter fed to a first gas/liquid separator 12. The first gas/liquid separator 12 removes the water (H₂O) condensed in the cooled mixed gas G3 from the cooled mixed gas G3 to form a mixed gas G4 containing CO, H₂, and CO₂. The mixed gas G4 is fed to the CO purification part 4.

The CO purification part 4 can purify the mixed gas G4 to form purified CO. The CO purification part 4 can be constituted by applying, for example, a CO-PSA (Pressure Swing Adsorption method) of using a copper ion-zeolite adsorbent, a copper ion activated carbon adsorbent, a copper chloride-aluminum-crosslinked polystyrene solid adsorbent, a copper chloride-aluminum-activated carbon adsorbent, or the like, a cuprammonium cleaning method, a copper aluminum chloride complex solution absorption method, a copper chloride-aluminum-polystyrene polymer complex solution absorption method, a low-temperature method, or the like is applied. The purified CO is accommodated in a storage container such as a tank which is not illustrated, for example, or is fed to an organic-substance synthesis reactor such as a methane synthesis reactor, an alcohol synthesizer, or a Fischer-Tropsch reactor which perform a reaction between CO and H₂, for example. The CO purification part 4 constituted by applying the CO-PSA or the like may be replaced by one of these organic-substance synthesis reactors. The CO purification part 4 can discharge a purification residual gas G5 left by purifying the CO. The purification residual gas G5 contains residual CO, residual H₂, and residual CO₂. The purification residual gas G5 discharged from the CO purification part 4 is fed to the oxidation part 6.

Meanwhile, The anode chamber 9 of the CO₂ electrolysis part 3 can perform the oxidation of a carbonate ion (CO₃²⁻) and hydroxide ions (OH⁻) to produce oxygen (O₂) and carbon dioxide (CO₂), as presented in the formula (2) and formula (4). A gas (O₂-CO₂ containing gas) containing the O₂ and CO₂, which is produced in the anode chamber 9, is discharged from the anode chamber 9 with the electrolytic solution. The electrolytic solution containing the O₂-CO₂ containing gas is fed to a second gas/liquid separator 13. The second gas/liquid separator 13 can separate the O₂-CO₂ containing gas from the electrolytic solution. The O₂-CO₂ containing gas G6 separated by the second gas/liquid separator 13 is cooled to a predetermined temperature by a cooler 14, and thereafter fed to a third gas/liquid separator 15. The electrolytic solution separated by the second gas/liquid separator 13 is cooled to a predetermined temperature by a cooler 16, and thereafter fed to a buffer tank 17. In addition to electrolytic solution, the condensed water (H₂O) separated by the third gas/liquid separator 15 is also fed to the buffer tank 17. The electrolytic solution fed to the buffer tank 17 is supplied with water from a makeup tank 18 as necessary, and thereafter fed to the anode chamber 9 of the CO₂ electrolysis part 3 via a pump 19 again.

The O₂-CO₂ containing gas G6 separated by the second and third gas/liquid separators 13, 15 is subjected to a removal of residual H₂O in a H₂O removal part 20, and thereafter fed to the CO₂ capture part 5. The H₂O removal part 20 can have a water vapor-removing polymer membrane or a water vapor adsorbent such as zeolite, silica gel, mesoporous silica or activated carbon. In the CO₂ capture part 5, for example, as a CO₂ adsorbent, a primary or secondary amine-supported material, FAU-type zeolite, or GIS-type zeolite is used, and as an organic ligand, a benzene-1,4-dicarbohydroxamic acid is used, at the same time, as an ancillary ligand, an isonicotinic acid is used, and Co-MOF (Metal Organic Frameworks) obtained by a reaction with cobalt nitrate, ZIF-69 (CAS No. 1018477-10-5, chemical formula: C₁₀H₆N5O₂ClZn), Cubic[Zn₄O(piperazine dicarbamate)3], or the like is used, and thereby CO₂ is separated and captured by the pressure swing adsorption (PSA) method, or the temperature swing adsorption (TSA) method depending on the adsorbent.

In the CO₂ capture part 5, with use of, as an oxygen adsorbent, an organic semiconductor such as a tetracyanoquinodimethane (CAS No. 1518-16-7, chemical formula: (NC)₂CC₆H₄C(CN)₂) pore material, O₂ may be separated and captured by the pressure swing adsorption (PSA) method or the temperature swing adsorption (TSA) method, resulting in capturing CO₂. To CO₂ capture part 5, a faradaic electro-swing reactive adsorption method in which polyvinylferrocene is used as a counter electrode with poly-1,4-anthraquinone used as a CO₂ adsorption electrode may be applied.

A gas G7 containing CO₂ separated and captured in the CO₂ capture part 5 contains residual O₂. The gas G7 containing CO₂ and the residual O₂ is fed to the oxidation part 6. The oxidation part 6 can perform a reaction between the purification residual gas (reducing gas) G5 and the gas G7, the purification residual gas G5 being discharged from the CO purification part 4 and containing residual CO and unreacted CO₂, and the gas G7 being separated and captured in the CO₂ capture part 5 and containing CO₂ and residual O₂. The residual CO in the gas G5 is oxidized by O₂ in the gas G7, and converted into CO₂. In addition, the O₂ in the gas G7 separated and captured in the CO₂ capture part 5 is removed. This allows a reduction and moreover a further reduction in an O₂ amount in a CO₂ gas G8 returned from the oxidation part 6 to the cathode chamber 8 of the CO₂ electrolysis part 3.

That is, when the CO₂ gas supplied to the cathode chamber 8 of the CO₂ electrolysis part 3 contains O₂, O₂ degrades carbon materials forming the reduction electrode (cathode) disposed in the cathode chamber 8, O₂ aggregates metal particles such as gold, silver or copper particles contained as a reduction catalyst in the reduction electrode (cathode), or the like, thereby lowering performance of the reduction electrode. Thus, when the gas G7 containing CO₂ separated and captured in the CO₂ capture part 5 contains the residual O₂, the CO₂ gas G8 cannot be fed to the cathode chamber 8 again. In contrast to this, a removal of O₂ in the gas G7 separated and captured in the CO₂ capture part 5 by the reaction of the purification residual gas (reducing gas) G5 containing the residual CO and the unreacted CO₂ and the gas G7 containing CO₂ and the residual O₂ separated and captured in the CO₂ capture part 5 in the oxidation part 6 allows the mixed gas G8 of the gas G7 containing CO₂ and the gas G5 containing the unreacted CO₂ and CO₂ newly produced by the oxidation of CO to be resupplied to the cathode chamber 8 of the CO₂ electrolysis part 3 without adversely affecting the cathode chamber 8.

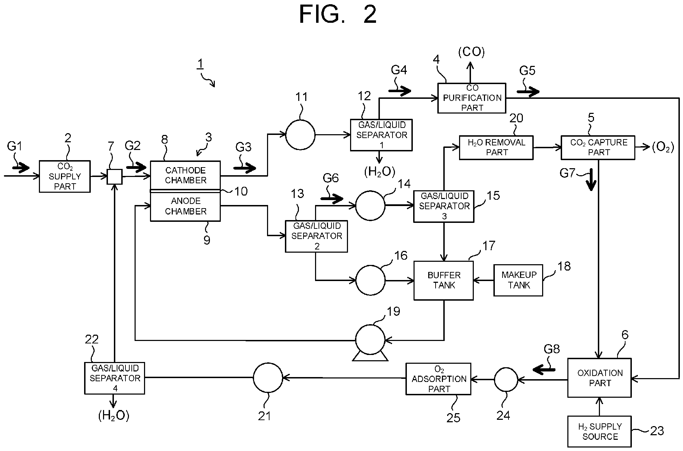

The CO₂ gas G8 is cooled by a cooler 21, and thereafter fed to a fourth gas/liquid separator 22. Saturated steam and condensed water (H₂O) are removed by the fourth gas/liquid separator 22, and thereafter the CO₂ gas G8 is fed to the gas mixer 7. The CO₂ gas G8 is mixed with the CO₂ gas G2 supplied from the CO₂ supply part 2 by the gas mixer 7, and is thereafter supplied to the cathode chamber 8 of the CO₂ electrolysis part 3. The oxidation part 6 may be constituted by applying a hydrogen-oxygen recombination catalyst or a combustion catalyst such as Ni-Ce₂O₃-Pt to enable enhancing removability of oxygen. Depending on a residual O₂ concentration in the CO₂ containing gas G7 supplied from the CO₂ capture part 5 or a residual CO concentration in the purification residual gas G5 discharged from the CO purification part 4, as illustrated in FIG. 2, the carbon dioxide conversion apparatus may have a H₂ supply source 23. Moreover, the carbon dioxide conversion apparatus may have an O₂ concentration meter 24 and an O₂ adsorption part 25 in the middle of a pipe to feed the CO₂ gas G8 from the oxidation part 6 to the fourth gas/liquid separator 22. These elements allow a further stable reduction in the O₂ concentration in the CO₂ gas G8.

To control an amount of water vapor of the CO₂ gas G2, and reduce an amount of diffusing water vapor from the electrolytic solution, the CO₂ gas may be appropriately humidified in the gas mixer 7, or a removal amount of water vapor from the CO₂ gas G8 may be controlled by an outlet temperature of the cooler 21. For a reduction in load of the cooler 21 and/or a reduction in heating amount of the oxidation part 6, heat may be exchanged between the gas G8 and the gases G5, G7.

As described above, according to the CO₂ conversion apparatus 1 of the embodiment, the residual O₂ in the CO₂ gas G7 separated and captured in the CO₂ capture part 5 can be reacted with the residual CO in the purification residual gas G5 in the oxidation part 6 to remove the residual O₂ in the CO₂ gas G7 and capture the residual CO as CO₂. In addition to this, the unreacted CO₂ contained in the purification residual gas G5 can be captured. These allow a further stable reduction in the O₂ concentration in the CO₂ gas G8 adversely affecting the cathode chamber 8 in addition to a promotion of effective use of CO₂. That is, the unreacted and reproduced CO₂ can be effectively used with electrolysis ability of CO₂ by using the CO₂ electrolysis part 3 maintained.

Note that though not described and illustrated in the embodiment, and, FIG. 1 and FIG. 2, a blower, a pump, a compressor, or the like may be appropriately disposed, and the flow of the fluid such as gases and liquid may be assisted by them. Further, a part of a discharge gas from the CO₂ capture par 5 may be supplied for other uses such as underground storage, EOR, and CO₂ fixation (mineralization). Moreover, the O₂ gas after separating and capturing CO₂ in the CO₂ capture par 5 is captured as necessary.

Note that the configurations of the above-described embodiments are applicable in combination with each other, and parts thereof are also replaceable. While certain embodiments of the present invention have been described above, these embodiments have been presented by way of example only, and are not intended to limit the scope of the invention. Indeed these embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A carbon dioxide conversion apparatus comprising:
a carbon dioxide supply part configured to capture carbon dioxide from a carbon dioxide containing gas and supply the carbon dioxide;
a carbon dioxide electrolysis part comprising:
a cathode chamber configured to receive the carbon dioxide from the carbon dioxide supply part and reduce the carbon dioxide to produce carbon monoxide; and
an anode chamber configured to oxidize an oxidizable substance to produce oxygen and carbon dioxide;
a carbon dioxide capture part configured to separate and capture the carbon dioxide from an oxygen-carbon dioxide containing gas to be produced in the anode chamber;
a carbon monoxide purification part configured to purify the carbon monoxide from a carbon monoxide containing gas to be produced in the cathode chamber; and
an oxidation part configured to perform a reaction between a reducing gas and a carbon dioxide containing gas, the reducing gas being discharged from the carbon monoxide purification part and containing a residual carbon monoxide, and the carbon dioxide containing gas being separated and captured in the carbon dioxide capture part and containing a residual oxygen.

2. The apparatus according to claim 1, wherein
the oxidation part is configured to remove the residual oxygen in the carbon dioxide containing gas by the reaction to purify the carbon dioxide containing gas.

3. The apparatus according to claim 1, wherein
the oxidation part is configured to perform a reaction of the residual carbon monoxide in the reducing gas with the residual oxygen in the carbon dioxide containing gas to produce carbon dioxide.

4. The apparatus according to claim 2, wherein
the oxidation part is configured to supply the carbon dioxide containing gas purified by the reaction to the cathode chamber of the carbon dioxide electrolysis part.

5. A carbon dioxide conversion method comprising:
reducing carbon dioxide to produce carbon monoxide in a cathode chamber of a carbon dioxide electrolysis part, and oxidizing an oxidizable substance to produce oxygen and carbon dioxide in an anode chamber of the carbon dioxide electrolysis part;
separating and capturing carbon dioxide from an oxygen-carbon dioxide containing gas containing the oxygen and the carbon dioxide produced in the anode chamber;
purifying the carbon monoxide in a carbon dioxide containing gas containing the carbon monoxide produced in the cathode chamber; and
performing a reaction between a reducing gas and a carbon dioxide containing gas, the reducing gas containing a residual carbon monoxide left by purifying the carbon monoxide, and the carbon dioxide containing gas containing a residual oxygen left by separating and capturing the carbon dioxide.

6. The method according to claim 5, wherein
the residual oxygen in the carbon dioxide containing gas is removed by the reaction.

7. The method according to claim 5, wherein
the residual carbon monoxide in the reducing gas is reacted with the residual oxygen in the carbon dioxide containing gas to produce carbon dioxide by the reaction.

8. The method according to claim 6, wherein
the carbon dioxide containing gas purified by the reaction is supplied to the cathode chamber.
